# EUROPÄISCHE PATENTSCHRIFT

(11) **EP 1 698 445 B1**
(45) Veröffentlichungstag und Bekanntmachung des Hinweises auf die Patenterteilung: **06.01.2010**
(21) Anmeldenummer: 06010657.2
(22) Anmeldetag: 29.03.2004
(51) Int. Cl.: B29C 47/22, B29C 47/92, B29C 49/64, B29C 49/78, B29C 49/42, B29C 49/04, B29C 47/06, B29C 47/26, B29C 47/28

(54) **Verfahren zum Blasformen von Hohlkörpern aus thermoplatischem Kunststoff**
Method of blow moulding hollow thermoplastic articles
Procédé de moulage par soufflage de corps creux en matière thermoplastique

(30) Priorität: 28.03.2003 DE 10314401; 26.06.2003 DE 10328655
(43) Veröffentlichungstag der Anmeldung: 06.09.2006
(62) Teilanmeldung aus: 04724006.4
(73) Patentinhaber: Feuerherm, Harald, D-53840 Troisdorf (DE)
(72) Erfinder: Feuerherm, Harald, D-53840 Troisdorf (DE)
(74) Vertreter: Albrecht, Rainer Harald

(56) Entgegenhaltungen:
- US-A- 3 795 719
- US-A- 4 993 582
- US-A- 5 102 588
- PATENT ABSTRACTS OF JAPAN Bd. 015, Nr. 232 (M-1124), 13. Juni 1991 (1991-06-13) -& JP 03 071821 A (YOSHINO KOGYOSHO CO LTD), 27. März 1991 (1991-03-27) -& DATABASE WPI Week 199119 Derwent Publications Ltd., London, GB; AN 1991-135783 XP002302188 & JP 03 071821 A 27. März 1991 (1991-03-27)
- PATENT ABSTRACTS OF JAPAN Bd. 007, Nr. 187 (M-236), 16. August 1983 (1983-08-16) -& JP 58 087026 A (ISHIKAWAJIMA HARIMA JUKOGYO KK), 24. Mai 1983 (1983-05-24) -& DATABASE WPI Week 198326 Derwent Publications Ltd., London, GB; AN 1983-62866K XP002302185 & JP 58 087026 A 24. Mai 1983 (1983-05-24)
- PATENT ABSTRACTS OF JAPAN Bd. 1995, Nr. 01, 28. Februar 1995 (1995-02-28) -& JP 06 293061 A (UBE IND LTD), 21. Oktober 1994 (1994-10-21) -& DATABASE WPI Week 199502 Derwent Publications Ltd., London, GB; AN 1995-009311 XP002302184 & JP 06 293061 A 21. Oktober 1994 (1994-10-21)
- PATENT ABSTRACTS OF JAPAN Bd. 1995, Nr. 01, 28. Februar 1995 (1995-02-28) -& JP 06 293059 A (UBE IND LTD), 21. Oktober 1994 (1994-10-21)
- PATENT ABSTRACTS OF JAPAN Bd. 017, Nr. 198 (M-1398), 19. April 1993 (1993-04-19) -& JP 04 344220 A (UBE IND LTD), 30. November 1992 (1992-11-30) -& DATABASE WPI Week 199302 Derwent Publications Ltd., London, GB; AN 1993-014881 XP002302189 & JP 04 344220 A 30. November 1992 (1992-11-30)
- PATENT ABSTRACTS OF JAPAN Bd. 017, Nr. 155 (M-1388), 26. März 1993 (1993-03-26) -& JP 04 323019 A (UBE IND LTD), 12. November 1992 (1992-11-12) -& DATABASE WPI Week 199252 Derwent Publications Ltd., London, GB; AN 1992-427825 XP002302186 & JP 04 323019 A 12. November 1992 (1992-11-12)
- PATENT ABSTRACTS OF JAPAN Bd. 014, Nr. 228 (M-0973), 15. Mai 1990 (1990-05-15) -& JP 02 057317 A (MAZDA MOTOR CORP), 27. Februar 1990 (1990-02-27) -& DATABASE WPI Week 199014 Derwent Publications Ltd., London, GB; AN 1990-104968 XP002302187 & JP 02 057317 A 27. Februar 1990 (1990-02-27)

## Beschreibung

Die Erfindung betrifft ein Verfahren zum Blasformen von Hohlkörpern aus thermoplastischem Kunststoff, bei dem schlauchförmige Vorformlinge aus Kunststoffschmelze durch eine Ringspaltdüse einer Düse/Dorneinheit nach unten ins Freie extrudiert und in einer Blasform zu Hohlkörpern aufgeweitet werden,
wobei die aus der Ringspaltdüse austretenden Vorformlinge schwellen, durch ihr Eigengewicht auslängen sowie durch ein viskoelastisches Verhalten der Schmelze relaxieren,
wobei die Spaltbreite der Ringspaltdüse während eines Vorformlingsaustritts von einem mit der Vorformlingsbildung ablaufenden Programm gesteuert wird, so dass der Vorformling ein sich in Längsrichtung änderndes Wandstärkenprofil erhält, und
wobei die Extrusionsgeschwindigkeit und/oder die Spaltbreite der Ringspaltdüse so korrigiert werden, dass der Vorformling in der Blasform eine vorgegebene Position einnimmt.

Solche Verfahren sind aus US 3795719 und US 5102588 bekannt.

Der aus dem Düsenspalt austretende Vorformling ist frei formbar inneren und äußeren Kräften ausgesetzt. Aufgrund des viskoelastischen Verhaltens der Kunststoffschmelze kann sich die Materialverteilung und der Durchmesser im Vorformling ändern, beispielsweise durch Schwankungen der Schmelzetemperatur, des Kunststoffmaterials, der Extrusionszeit, auf die Schmelze wirkenden Scherbeanspruchungen und dergleichen. Ferner resultieren aus Phänomenen, die als Schwellen, Auslängen und Relaxieren bezeichnet werden, viskoelastische Verformungen, die sich auf die äußeren und inneren Abmessungen des Vorformlings auswirken. Mit Schwellen bezeichnet man den Effekt, dass der Durchmesser und die Wandstärke des aus dem Strangpresskopf austretenden Vorformlings sich in Folge einer Rückorientierung der im Fließkanal ausgerichteten Moleküle ändert. Das Ausmaß des Schwellens ist von unterschiedlichen Faktoren abhängig, z. B. dem Grad der im Fließkanal eingebrachten Orientierungen und eines Rückerinnerungsvermögens des Materials. Durch das Phänomen des Relaxierens nimmt der Vorformlings nach Beendigung der Vorformlingsextrusion wieder in seiner Länge ab. Die Längenabnahme entsteht in erster Linie durch eine Rückbildung der im Fließkanal eingebrachten Orientierungen. Die beim Phänomen des Relaxierens einflussnehmende Größe ist insbesondere die Zeit, die zum Abbau der Orientierungen zur Verfügung steht. Die Verkürzung durch Relaxieren ist verbunden mit einer Zunahme der Wandstärke sowie einer Durchmessererweiterung des Vorformlings. Der Effekt des Relaxierens ist über der Vorformlingslänge lokal unterschiedlich, da später extrudierten Bereichen weniger Zeit zur Rückbildung der Orientierungen bleibt. Auslängung tritt in Folge des Eigengewichtes des Vorformlings auf. Unter dem mit der Extrusion zunehmenden Gewicht des Vorformlings verringern sich Durchmesser und Wandstärke des Vorformlings unterhalb des Kopfaustritts. Die Auslängung wird von der Vorformlingsunterkante beginnend mit zunehmender Masse des aus dem Strangpresskopf austretenden Vorformlings größer. Die beobachtete Austrittsgeschwindigkeit des Vorformlings nimmt dabei zu. Die beschriebenen viskoelastischen Effekte stehen in einer komplexen Wechselwirkung. Mit längerer Extrusionszeit und höherer Massetemperatur wird die Auslängung größer. Mit der Zunahme der in einem Vorformlingsabschnitt herrschenden Auslängung nimmt der lokale Vorformlingsdurchmesser und die Vorformlingswanddicke ab. Der am Düsenaustritt vorliegende Vorformlingsdurchmesser nimmt mit dem an ihm hängenden Vorformlingsgewicht ab. Andererseits nimmt die Schwellung zu bei einer Reduzierung des Düsenspaltes und bei einer Vergrößerung der Extrusionsgeschwindigkeit. Insbesondere bei längerer Extrusionszeit wirken sich die Phänomene der Relaxation aus. Die beschriebenen Phänomene sind seit langem bekannt und beispielsweise in S. Bätz, "Blasformen-Einflußgrößen bei der Vorformlingsbildung mit Bezug auf die Wanddickensteuerung", Diplomarbeit an der Fachhochschule Darmstadt, Fachbereich Kunststofftechnik, 1. Juni 1993, beschrieben.

Ein Verfahren mit den eingangs beschriebenen Merkmalen ist aus EP-A 1 004 423 bekannt. Die Extrusionsgeschwindigkeit und/oder die Spaltbreite der Ringspaltdüse werden so korrigiert, dass der Vorformling in der Blasform eine vorgegebene Position einnimmt. Hierdurch wird sichergestellt, dass sich die viskoelastischen Effekte nicht störend auf die Lage des Vorformlings in der Blasform auswirken. Dem optimalen Durchmesser des schlauchförmigen Vorformlings wird bei laufender Hohlkörperfertigung keine Beachtung geschenkt. Es bleibt unberücksichtigt, dass der Durchmesser des Vorformlings sich auf die Qualität des Blasformergebnisses auswirkt. So beeinflusst der Durchmesser des Vorformlings beispielsweise den Reckgrad bei der Aufweitung des Vorformlings in der Blasform. Es wird hingenommen, dass die Breite der oberen Quetschnaht im Vergleich zu einem Vorgabewert häufig zu klein oder die Breite der unteren Quetschnaht zu groß ausfällt. Die Einhaltung eines definierten Durchmessers ist insbesondere angezeigt, wenn der Vorformling in der Blasform zu komplizierten Behälterformen aufgeweitet wird.

Bei einem in JP 03-071821 A beschriebenen Verfahren werden die Vorformlinge zunächst mit einer bestimmten Länge extrudiert, an ihrem unteren Ende abgequetscht und danach außenseitig mit Vakuum beaufschlagt. Beim Anlegen einer Vakuumkammer wird ein mittlerer Abschnitt der Vorformlinge zwischen ihrem oberen und unteren Ende deformiert.

Aus US-A-4 993 582 und JP 58-087026 A sind Spreüzvorrichtungen bekannt, dass schlauchförmige Vorformlinge so verformt werden können, dass sie von einer Zylinderform abweichen. Es soll eine Anpassung an die Form der Blasform vorgenommen werden.

In JP 06-293059 A, JP 04-344220 A und JP 06293061 werden Vorrichtungen in unterschiedlichen Ausführungen beschrieben, welche die Unterkante eines aus einer Ringspaltdüse austretenden Vorformlings während der Vorformlingsextrusion abstützen. Durch die bekannten Vorrichtungen werden die Vorformlinge bei der Extrusion besser geführt. Die Vorrichtungen sorgen darfür, dass die Vorformlinge eine vorgegebene Lage relativ zur Blasform einnehmen, bevor die Blasform geschlossen wird.

Der Erfindung liegt die Aufgabe zugrunde, das eingangs beschriebene Verfahren so weiter auszubilden, dass der Vorformling in der Blasform nicht nur eine vorgegebene Lage einnimmt, sondern seinen Durchmesser bzw. seine Quetschnahtlänge verändert und an Vorgaben angepasst werden kann. Die Vorgaben können sowohl definierte Aufweitungen als auch definierte Einschnürungen des Vorformlings betreffen. Die Veränderung soll ohne Betriebsunterbrechung, also bei laufender Hohlkörperfertigung, möglich sein.

Diese Aufgabe wird erfindungsgemäß durch ein Verfahren nach Anspruch 1 gelöst.

Bei dem erfindungsgemäßen Verfahren werden die Extrusionsgeschwindigkeit und/oder die Spaltbreite der Ringspaltdüse so korrigiert, dass der Vorformling in der Blasform eine vorgegebene Position einnimmt. Zusätzlich erfolgt eine Beeinflussung und Einstellung des Vorformlingsdurchmessers durch ein Bündel von Maßnahmen, die einzeln oder in Kombination verwirklicht werden können. Hierdurch kann unter anderem sichergestellt werden, dass sowohl die Breite der oberen als auch der unteren Quetschnaht des Vorformlings zu der Blasform einem Vorgabewert entspricht. Ferner ist die Durchmesservergrößerung vorteilhaft beim Einführen von Einlegeteilen in den Vorformling.

Das erfindungsgemäße Verfahren hat besondere Vorteile bei einer kontinuierlichen Vorformlingsproduktion. Es ist jedoch auch für einen diskontinuierlichen Ausstoßbetrieb, bei dem Vorformlinge absatzweise hergestellt werden, geeignet. Das Verfahren kann auch zur Reduzierung von Rüstzeiten während eines Produktwechsels genutzt werden. Bei Anlagen, bei denen einer Düse/Dorneinheit zwei oder mehr Blasformen zugeordnet sind, die wechselweise mit einem aus der Düse/Dorneinheit austretenden Vorformling beschickt werden, ermöglicht es das erfindungsgemäße Verfahren ferner, in die parallel betriebenen Blasformen Vorformlinge mit unterschiedlichen Durchmessern einzubringen, die zu unterschiedlichen Hohlkörpern aufgeweitet werden. Auf diese Weise können mit einer einzigen Düse/Dorneinheit unterschiedliche Hohlkörper nebeneinander gefertigt werden.

Im Rahmen der erfindungsgemäßen Lehre wird der Durchmesser der schlauchförmigen Vorformlinge dadurch gezielt beeinflusst, dass auf die Auslängung des Vorformlings oder die Relaxation Einfluss genommen wird. Es ergeben sich im Rahmen der erfindungsgemäßen Lehre eine Mehrzahl von Möglichkeiten, um dies zu verwirklichen. Eine Ausführung sieht vor, dass die Unterkante des Vorformlings während der Vorformlingsextrusion abgestützt und hierdurch das wirksame Eigengewicht des Vorformlings verändert wird. Die Abwärtsbewegung kann geregelt werden. Gemäß einer weiteren Ausgestaltung der erfindungsgemäßen Lehre wird der aus der Ringspaltdüse austretende Vorformling mit einem gasförmigen Medium gekühlt, wobei die Gasmenge und/oder Gastemperatur während der Vorformlingsextrusion gesteuert wird. Auch hierdurch kann die Auslängung des Vorformlings beeinflusst werden. Ebenso ist es möglich, den Vorformling vorwiegend im zuerst ausgestoßenen Bereich zu erwärmen. Schließlich besteht die Möglichkeit, die Auslängung des Vorformlings durch Änderung der Schmelzetemperatur zu steuern.

Sofern mehrschichtige Hohlkörper gefertigt werden, kann bei einer Extrusion des entsprechend mehrschichtig ausgebildeten Vorformlings das Verhältnis der Schichtdicken gesteuert werden, um die Auslängung des Vorformlings zu verändern.

Um den Durchmesser des Vorformlings während der Vorformlingsextrusion zu verändern, können Vorrichtungen verwendet werden, die mit dem Vorformling nach unten bewegt werden. Es ergeben sich zahlreiche Möglichkeiten für die Ausgestaltung von solchen Vorrichtungen. Die Vorrichtung kann eine tellerförmige Auflagefläche aufweisen, die das offene Ende des Vorformlings während der Vorformlingsextrusion abstützt und hierdurch das wirksame Eigengewicht des Vorformlings verändert. Eine weitere Ausgestaltung sieht vor, dass das offene Ende des Vorformlings während der Vorformlingsextrusion auf einen Konus aufläuft und durch außenseitig gegen den Konus bewegte Verschlusselemente gegen den Konus zumindest teilweise abgedichtet wird. Die aus dem Konus und den Verschlusselementen gebildete Vorrichtung wird mit dem Vorformling nach unten bewegt, wobei die Abwärtsbewegung gegebenenfalls auch geregelt werden kann. Durch eine Abwärtsbewegung, die größer ist als die Extrusionsgeschwindigkeit, kann der Vorformlingsdurchmesser gezielt reduziert werden. Es besteht die weitere Möglichkeit, in den durch den Konus verschlossenen Innenraum ein gasförmiges Medium einzublasen, um den Durchmesser des Vorformlings zu verändern. Im Rahmen der Erfindung liegt es ferner, an den Vorformling während der Vorformlingsextrusion eine Vakuumkammer anzulegen, die auch im Kontakt mit dem Vorformling nach unten bewegt werden kann. Schließlich besteht die Möglichkeit, den Vorformling über eine Spreizvorrichtung zu führen, die unterhalb des Strangpresskopfes in einem Raum zwischen dem Strangpresskopf und der Blasform angeordnet ist und auf die Innenfläche des Vorformlings wirkende gesteuerte Spreizbewegungen ausführt. Die Spreizvorrichtung wird zum Ende eines Vorformlingsausstosses betätigt. Im Rahmen der Erfindung liegt es, dass die Spreizvorrichtung stationär angeordnet ist oder in Ausstoßrichtung gesteuerte Bewegungen ausführt oder nach Berühren mit dem Vorformling nach unten bewegt wird. Gemäß einer weiteren Ausgestaltung der Erfindung weist die Spreizvorrichtung einen in Ausstoßrichtung bewegbaren Spreizkopf auf, der im Kontakt mit dem Vorformling gesteuerte Bewegungen in Ausstoßrichtung ausführt. Der Spreizkopf kann mit dem Vorformling bis in die geöffnete Blasform hineinbewegt werden. Vor dem Schließen der Blasform werden Spreizelemente des Spreizkopfes eingefahren und der Spreizkopf innerhalb des Vorformlings bis in den Bereich oberhalb der Blasform zurückgezogen. Bei allen beschriebenen Ausführungen besteht die Möglichkeit, die Bewegung der Vorrichtung zu regeln.

Bevorzugte Ausführungen des erfindungsgemäßen Verfahrens werden im Folgenden anhand von Ausführungsbeispielen näher erläutert. Es zeigen schematisch:
- **Fig. 1**: eine Blasformanlage zum Herstellen von Hohlkörpern aus thermoplastischem Kunststoff,
- **Fig. 2 bis 6**: Zusatzeinrichtungen der in Fig. 1 dargestellten Blasformanlage in verschiedenen Ausgestaltungen entsprechend der erfindungsgemäßen Lehre.

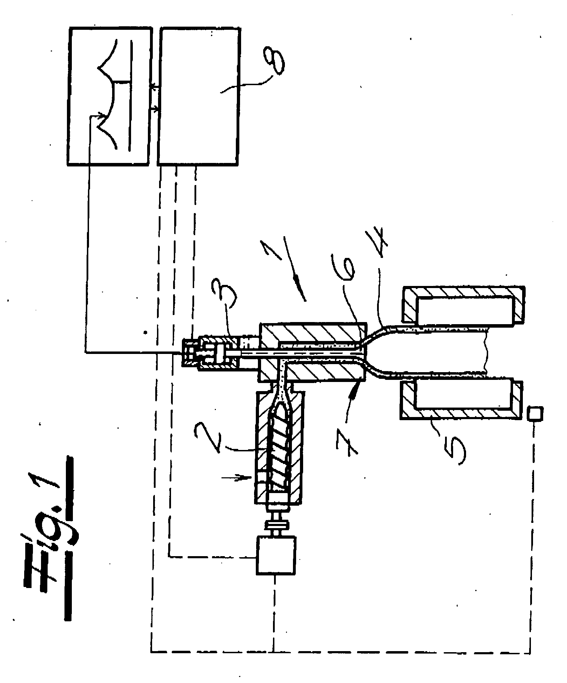

Zum grundsätzlichen Aufbau der in Fig. 1 dargestellten Blasformanlage gehören ein Strangpresskopf 1, eine Vorrichtung 2 zur Förderung einer Kunststoffschmelze durch den Strangpresskopf, eine programmgesteuerte Steileinrichtung 3 zur Steuerung des Düsenspaltes während der Extrusion eines Vorformlings 4 sowie eine unterhalb des Strangpresskopfes 1 angeordnete Blasform 5 zum Aufweiten eines mit einem offenen Vorformlingsende aus dem Düsenspalt austretenden schlauchförmigen Vorformlings 4 zu einem Hohlkörper. Der Strangpresskopf 1 weist eine Düse/Dorneinheit 6 mit einem ringförmigen Düsenspalt, der im Folgenden als Ringspaltdüse 7 bezeichnet wird, auf. Ferner ist eine Regelung 8 vorgesehen, welche die Extrusionsgeschwindigkeit und/oder die Ringspaltdüse so korrigiert, dass der Vorformling 4 in der Blasform 5 eine vorgegebene Position einnimmt. Geeignete Regelverfahren sind in EP-A 0 345 474 und EP-A 0 776 752 beschrieben.

Es ist bekannt, dass die aus der Ringspaltdüse austretenden Vorformlinge 4 schwellen, durch ihr Eigengewicht auslängen sowie durch ein viskoelastisches Verhalten der Schmelze relaxieren. Durch im Folgenden näher beschriebenen Zusatzeinrichtungen 10 wird der Durchmesser der Vorformlinge durch Verstellen des Austrittsdurchmessers der Ringspaltdüse oder durch Betätigung einer Vorrichtung, die stationär angeordnet ist oder in Ausstoßrichtung gesteuerte Bewegungen ausführt oder im Kontakt mit dem Vorformling nach unten bewegt wird, oder durch Beeinflussen des Schwellens, durch Einwirken auf die Auslängung oder Relaxation oder durch eine Kombination dieser Maßnahmen während der Extrusion eines Vorformlings verändert. Das Verfahren ist sowohl für eine kontinuierliche Vorformlingsextrusion als auch für einen Ausstoßbetrieb geeignet.

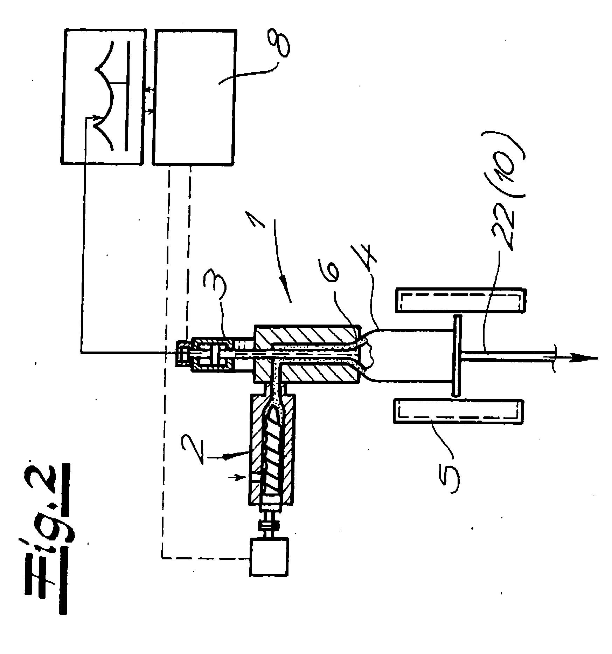

In den Ausführungsbeispielen der Fig. 2 bis 4 sind als Zusatzeinrichtung 10 Vorrichtungen 22 beschrieben, die im Kontakt mit dem Vorformling 4 nach unten bewegbar sind.

Im Ausführungsbeispiel der Fig. 2 ist die Vorrichtung 22 tellerförmig ausgebildet und stützt die Unterkante des aus der Ringspaltdüse 7 austretenden Vorformlings 4 während der Vorformlingsextrusion. Die Abwärtsbewegung der mit dem Vorformling 4 in Eingriff stehenden Vorrichtung 22 wird vorzugsweise geregelt. Durch die Vorrichtung 22 wird das wirksame Eigenwicht des Vorformlings 4 während des Extrusionsvorganges verändert und das Auslängen des Vorformlings beeinflusst. Die Beeinflussung der Auslängung wirkt sich auf den Durchmesser des Vorformlings 4 aus. Ferner kann der Vorformling mit der in Fig. 2 beschriebenen Vorrichtung in eine genaue Lage zur Blasform gebracht werden. Bevor die Blasform 5 schließt, wird die Zusatzeinrichtung 10 aus dem Schließbereich der Blasform entfernt.

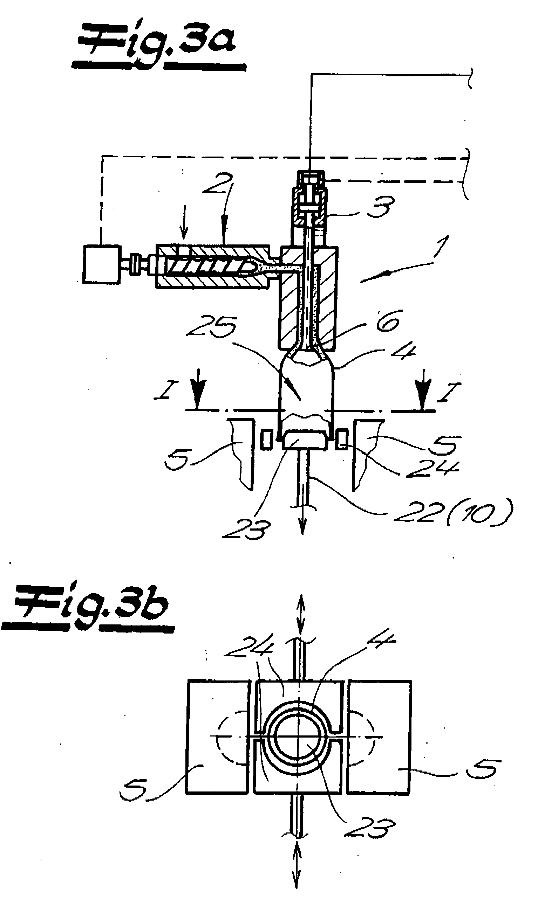

Im Ausführungsbeispiel der Fig. 3a ist als Zusatzeinrichtung 10 ebenfalls eine Vorrichtung 22 vorgesehen, die im Kontakt mit dem Vorformling nach unten bewegbar ist. Sie weist einen Konus 23 sowie gegen den Konus verstellbare Verschlusselemente 24 auf. Die Verschlusselemente 24 sind in der Fig. 3b dargestellt, welche den Schnitt I-I aus Fig. 3a zeigt. Die Verschlusselemente 24 sind als Klemmbacken ausgebildet und außenseitig gegen den Konus verstellbar. Während der Vorformlingsextrusion läuft das offene Ende des Vorformlings auf den Konus 23 auf. Durch Betätigung der Verschlusselemente 24 wird das Vorformlingsende gegen den Konus 23 abgedichtet. Sobald das Ende des Vorformlings mit der beschriebenen Vorrichtung in Kontakt getreten ist, wird diese mit einer vorgegebenen konstanten oder sich ändernden Geschwindigkeit nach unten bewegt. Durch eine Blaseinrichtung 25, die an die Vorrichtung 22 oder an den Strangpresskopf 1 angeschlossen ist, kann ein gasförmiges Medium in den Innenraum des Vorformlings eingeleitet werden, um den Durchmesser des Vorformlings zu verändern. Auch mit der in den Fig. 3a und 3b dargestellten Vorrichtung kann der Vorformling in eine genaue Lage zur Blasform gebracht werden. Bevor die Blasform 5 schließt, wird die Vorrichtung 22 aus dem Schließbereich der Blasform entfernt.

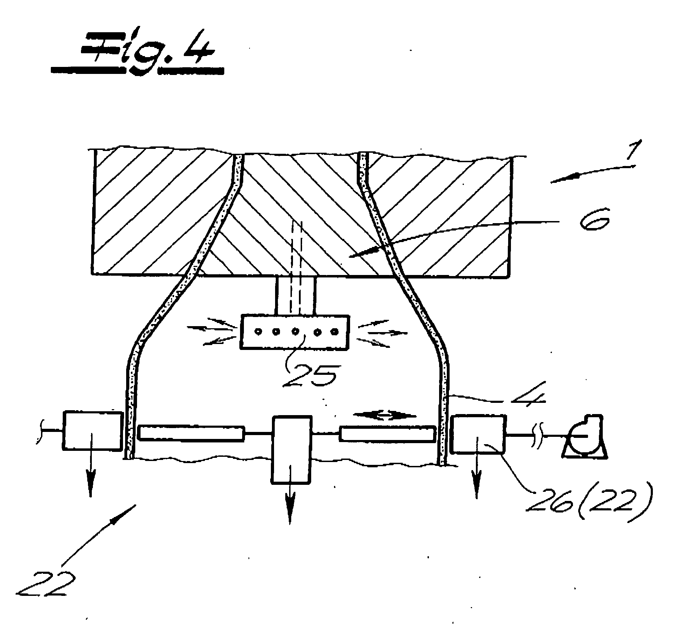

Fig. 4 zeigt ebenfalls Vorrichtungen 22, die im Kontakt mit dem Vorformling nach unten bewegbar sind. Die Vorrichtung 22 kann als Vakuumkammer 26 ausgebildet werden, welche den Vorformling umgibt. Ferner besteht die Möglichkeit, die Vorrichtung 22 als mechanische Spreizvorrichtung auszubilden. Ferner ist im Ausführungsbeispiel der Fig. 4 eine Blaseinrichtung 25 vorgesehen, die ortsfest installiert werden kann. Schließlich besteht die Möglichkeit, dass die Vorrichtung 22 eine auf die Außenseite des Vorformlings wirkende, radial verstellbare Kontaktfläche aufweist.

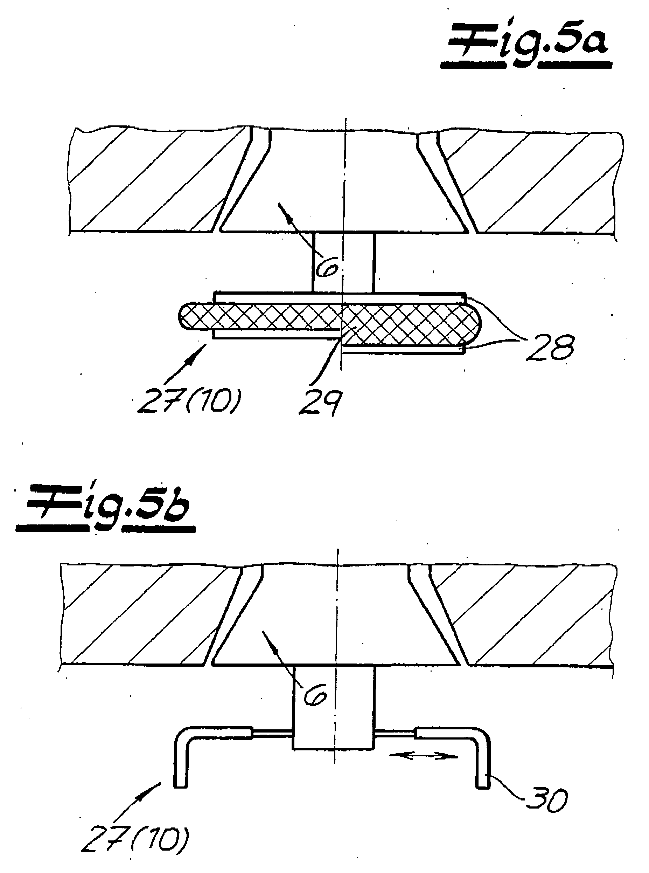

Im Ausführungsbeispiel der Fig. 5a ist die Zusatzeinrichtung 10 als mechanische Spreizvorrichtung 27 ausgebildet. Sie ist stationär angeordnet, wobei jedoch der Abstand zur Düse/Dorneinheit 6 verstellbar sein kann. Die Spreizvorrichtung 27 weist im Ausführungsbeispiel einen zwischen zwei Backen 28 eingespannten elastischen Einsatz 29 auf, der sich bei einer Stellbewegung der Backen verformt und dadurch seinen Durchmesser ändert.

Die Fig. 5b zeigt eine Spreizvorrichtung 27, mit horizontal verstellbaren Segmenten 30. Die Stellbewegung der Segmente 30 erfolgt vorzugsweise in Längsrichtung der Quetschnaht, die beim Schließen der Blasform an dem Vorformling gebildet wird. Durch die Spreizeinrichtung ist die Länge der Quetschnaht gezielt veränderbar.

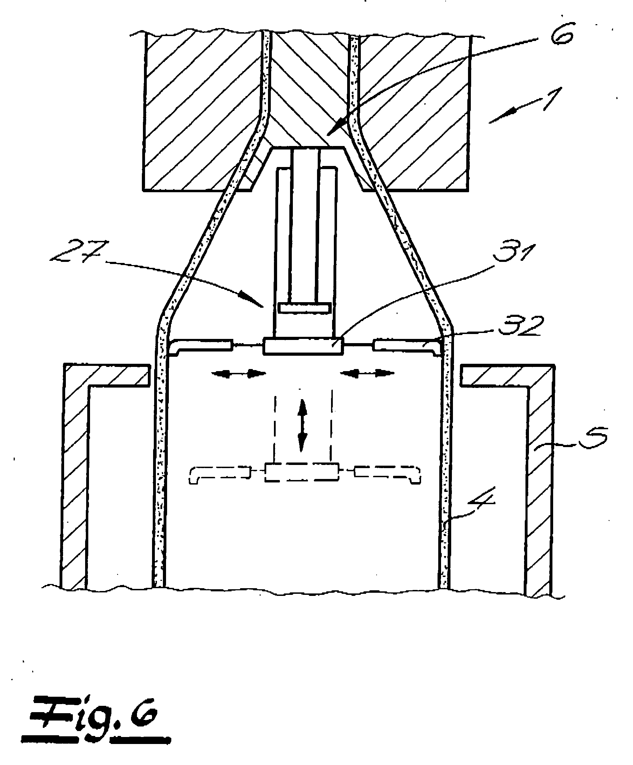

Die in den Fig. 4, 5a und 5b dargestellten Spreizvorrichtungen 27 sind jeweils unterhalb des Strangpresskopfes 1 in einem Raum zwischen dem Strangpresskopf und der Blasform 5 angeordnet und wirken auf die Innenfläche des Vorformlings 4. In den Ausführungsbeispielen der Fig. 5a und 5b sind die Spreizvorrichtungen stationär angeordnet. Im Rahmen der Erfindung liegt es jedoch auch, dass die Spreizvorrichtungen 27 in Ausstoßrichtung gesteuerte Bewegungen ausführen. Dies wird im Folgenden anhand der Fig. 6 erläutert. Die in Fig. 6 dargestellte Spreizvorrichtung 27 weist einen in Ausstoßrichtung bewegbaren Spreizkopf 31 auf, der im Kontakt mit dem Vorformling 4 gesteuerte Bewegungen in Ausstoßrichtung ausführt. Der Darstellung in Fig. 6 entnimmt man, dass der Spreizkopf 31 mit dem Vorformling 4 bis in die geöffnete Blasform 5 hinein bewegbar ist. Vor dem Schließen der Blasform 5 werden Spreizelemente 32 eingefahren sowie der Spreizkopf 31 innerhalb des Vorformlings bis in den Bereich oberhalb der Blasform 5 zurückgezogen.

Die erfindungsgemäß vorgesehenen Spreizvorrichtungen 27 werden vorzugsweise zum Ende eines Vorformlingsausstosses betätigt und wirken auf das obere Ende des Vorformlings.

Alle vorstehend anhand von Ausführungsbeispielen erläuterten Maßnahmen können einzeln oder in beliebigen Kombinationen verwirklicht werden. Die erfindungsgemäßen und anhand von Ausführungsbeispielen beschriebenen Vorrichtungen ermöglichen Änderungen des Vorformlingdurchmessers ohne Betriebsunterbrechung, also bei laufender Hohlkörperfertigung. Bei einer Produktumstellung kann mit Hilfe der Vorrichtung der Vorformlingsdurchmesser so verändert und angepasst werden, dass in vielen Fällen ein Austausch der Düse/Dorneinheit nicht mehr erforderlich ist. Dadurch können Rüstzeiten während eines Produktwechsels beachtlich reduziert werden. Bei Anlagen, bei denen einer Düse/Dorneinheit zwei oder mehr Blasformen zugeordnet sind, die wechselweise mit einem aus der Düse/Dorneinheit austretenden Vorformling beschickt werden, können mit Hilfe des erfindungsgemäßen Verfahrens in die parallel betriebenen Blasformen Vorformlinge mit unterschiedlichem Durchmesser eingebracht werden, die zu unterschiedlichen Hohlkörpern aufgeweitet werden. Auf diese Weise ist es möglich, mit einer einzigen Düse/Dorneinheit unterschiedliche Produkte zeitgleich zu fertigen.

## Patentansprüche

1. Verfahren zum Blasformen von Hohlkörpern aus thermoplastischem Kunststoff, bei dem schlauchförmige Vorformlinge (4) aus Kunststoffschmelze durch eine Ringspaltdüse (7) einer Düse/Domeinheit (6) nach unten ins Freie extrudiert und in einer Blasform zu Hohlkörpern aufgeweitet werden,
wobei die aus der Ringspaltdüse (7) austretenden Vorformlinge (4) schwellen, durch ihr Eigengewicht auslängen sowie durch ein viskoelastisches Verhalten der Schmelze relaxieren,
wobei die Spaltbreite der Ringspaltdüse (7) während eines Vorformlingsaustritts von einem mit der Vorformlingsbildung ablaufenden Programm gesteuert wird, so dass der Vorformling ein sich in Längsrichtung änderndes Wandstärtcenprofil erhält, und
wobei die Extrusionsgeschwindigkeit und/oder die Spaltbreite der Ringspaltdüse (7) so korrigiert werden, dass der Vorformling (4) in der Blasform (5) eine vorgegebene Position einnimmt,
**dadurch gekennzeichnet, dass** der Durchmesser der Vorformlinge (4) mit einer Zusatzeinrichtung (10) so eingestreut wird, dass die Breite der durch das Schließen der Blasform gebildeten oberen und unteren Quetschnähte Vorgabewerte entsprechen, wobei als Zusatzeinrichtung (10)
a) eine Spreizvorrichtung (27), die unterhalb des Strangpresskopfes (1) in einem Raum zwischen dem Strangpreßkopf (1) und der Blasform (5) angeordnet ist, auf die Innenfläche des Vorformlings (4) wirkende gesteuerte Bewegungen ausführt und zum Ende eines Vorformlingsausstoßes betätigt wird,
b) eine den Vorformling (4) umgebende Vakuumkammer (26) oder
c) eine Stützvorrichtung (22), welche die Unterkante des aus der Ringspaltdüse austretenden Vorformlings (4) während der Vorformlingsextrusion abstützt und im Kontakt mit dem Vorformling nach unten bewegt wird,
allein oder in Kombination verwendet werden.

2. Verfahren nach Anspruch 1, **dadurch gekennzeichnet, dass** die Spreizvorrichtung (27) einen in Ausstoßrichtung bewegbaren Spreizkopf (31) aufweist, der im Kontakt mit dem Vorformling gesteuerte Bewegungen in Ausstoßrichtung ausführt und mit dem Vorformling (4) bis in die geöffnete Blasform (5) hinein bewegt wird, und dass vor dem Schießen der Blasform (5) Spreizelemente (32) des Spreizkopfes (31) eingefahren werden sowie der Spreizkopf (31) innerhalb des Vorformlings (4) bis in den Bereich oberhalb der Blasform (5) zurückgezogen wird.

3. Verfahren nach Anspruch 1 oder 2, **dadurch gekennzeichnet, dass** der aus der Ringspaltdüse austretende Vorformling (4) mit gasförmigen Medien gekühlt oder erwärmt wird, wobei die Gasmenge und/oder Gastemperatur währen der Vorformlingsextrusion gesteuert wird.

4. Verfahren nach Anspruch 1, **dadurch gekennzeichnet, dass** das offene Ende des Vorformlings (4) während der Vorformlingsextrusion auf einen Konus (23) der Stützvorrichtung (22) aufläuft und durch außenseitig gegen den Konus (23) bewegte Verschlusselemente (24) zumindest teilweise abgedichtet wird und das in den durch den Konus (23) verschlossenen Innenraum ein gasförmiges Medium eingeblasen wird, um den Durchmesser des Vorformlings (4) zu verändern.

## Claims

1. A method of blow moulding hollow parts made from thermoplastic synthetic material, wherein tubular preforms (4) of plastic melt are extruded downwards into the open through an annular clearance nozzle (7) on a nozzle/mandrel unit (6) and expanded into hollow parts in a blow mould,
wherein the preforms (4) emerging from the annular clearance nozzle (7) swell, draw down under their own weight and are relaxed by the viscoelastic behaviour of the melt;
wherein the gap width of the annular clearance nozzle (7) can be controlled by a program running alongside the preform creation, so that the preform receives a wall thickness profile that changes longitudinally and
wherein the extrusion speed and/or the gap width of the annular clearance nozzle (7) are adjusted, such that the preform (4) adopts a predefined position in the blow mould (5),
**characterised in that** the diameter of the preforms (4) is adjusted using an additional device (10), such that the width of the upper and lower pinch seams formed by closing the blow mould meet standard values, wherein
a) a spreading device (27), which is disposed beneath the extrusion die head (1) in a space between the extrusion die head (1) and the blow mould (5), executes movements acting on the inner surface of the preform (4) and is actuated at the end of a preform ejection,
b) a vacuum chamber (26) surrounding the preform (4) or
c) a supporting device (22), which supports the underside of the preform (4) emerging from the annular clearance nozzle during preform extrusion and moves down in contact with the preform
are used either alone or in combination as the additional device (10).

2. The method according to claim 1, **characterised in that** the spreading device (27) exhibits an expanding head (31) movable in the ejection direction, which executes controlled movements in the ejection direction in contact with the preform and is moved with the preform (4) into the open blow mould (5) and that spreading elements (32) of the spreading head (31) are retracted before the blow mould (5) is closed and the spreading head (31) is drawn back within the preform (4) to the area above the blow mould (5).

3. The method according to claim 1 or 2, **characterised in that** the preform (4) emerging from the annular clearance nozzle is cooled or warmed using gaseous media, wherein the quantity of gas and/or the temperature of gas used during the preform extrusion is controlled.

4. The method according to claim 1, **characterised in that** the open end of the preform (4) runs into a cone (23) of the supporting device (22) during the preform extrusion and is at least partly sealed by closing elements (24) moved outside towards the cone (23) and that a gaseous medium is blown into the interior space closed by the cone (23), in order to alter the diameter of the preform (4).

## Revendications

1. Procédé de moulage par soufflage de corps creux en matière synthétique thermoplastique, dans lequel des préformes (4) en fonte de plastique sont extrudées vers le bas à l'air libre à travers une buse annulaire (7) d'une unité de buse/poinçon (6) et sont évasées en corps creux dans un moule de soufflage,
sachant que les préformes (4) sortant de la buse annulaire (7) gonflent, s'étirent par leur poids propre et se détendent par un comportement viscoélastique de la fonte,
sachant que la largeur de fente de la buse annulaire (7) pendant la sortie d'une préforme est commandée par un logiciel fonctionnant avec la formation de la préforme, de façon à ce que la préforme obtienne un profil d'épaisseur de paroi se modifiant dans le sens longitudinal, et
sachant que la vitesse d'extrusion et/ou la largeur de fente de la buse annulaire (7) est/sont ainsi corrigée(s) que la préforme (4) adopte une position prédéfinie dans le moule de soufflage (5),
**caractérisé en ce que** le diamètre de la préforme (4) est ainsi défini avec un dispositif supplémentaire (10) que la largeur des coutures par écrasement supérieure et inférieure, formées par la fermeture du moule de soufflage, correspond à des valeurs de consigne, sachant que comme dispositif supplémentaire (10)
a) un dispositif d'écartement (27) qui est placé sous la tête de compression continue (1) dans un espace entre la tête de compression continue (1) et le moule de soufflage (5), effectue des mouvements commandés agissant sur la face interne de la préforme (4) et est actionné jusqu'à la fin d'une expulsion de la préforme,
b) une chambre de vide (26) entourant la préforme (4) ou
c) un dispositif d'appui (22) qui appuie l'arête inférieure de la préforme (4) sortant de la buse annulaire pendant l'extrusion de la préforme et est déplacé vers le bas en contact avec la préforme,
sont employés seuls en ou combinaison.

2. Procédé selon la revendication 1, **caractérisé en ce que** le dispositif d'écartement (27) présente une tête d'écartement (31) mobile dans le sens de l'expulsion qui effectue des mouvements commandés en contact avec la préforme dans le sens de l'expulsion et est entrée avec la préforme (4) jusque dans le moule de soufflage (5) ouvert, et qu'avant la fermeture du moule de soufflage (5), des écarteurs de la tête d'écartement (31) sont rentrés et que la tête d'écartement (31) est reculée à l'intérieur de la préforme (4) jusque dans la partie au-dessus du moule de soufflage (5).

3. Procédé selon la revendication 1 ou 2, **caractérisé en ce que** la préforme (4) sortant de la buse annulaire est refroidie ou chauffée avec des agents gazeux, sachant que la quantité de gaz et/ou la température du gaz est/sont commandée(s) pendant l'extrusion de la préforme.

4. Procédé selon la revendication 1, **caractérisé en ce que** l'extrémité ouverte de la préforme (4) sort sur un cône (23) du dispositif d'appui (22) pendant l'extrusion de la préforme et est étanchéifiée au moins partiellement par des éléments de fermeture (24) déplacés contre le cône (23) côté extérieur et que dans l'espace intérieur fermé par le cône (23), un agent gazeux est soufflé pour modifier le diamètre de la préforme (4).
